# NEUE EUROPÄISCHE PATENTSCHRIFT

(11) **EP 0 489 298 B2**
(45) Veröffentlichungstag und Bekanntmachung des Hinweises auf die Entscheidung über den Einspruch: **17.03.1999**
(45) Hinweis auf die Patenterteilung: 12.10.1994
(21) Anmeldenummer: 91119698.8
(22) Anmeldetag: 19.11.1991
(51) Int. Cl.: F16G 5/20

(54) **Endloser Keilriemen oder Keilrippenriemen und Antriebssystem**
Endless V-belt or V-ribbed belt and transmission system
Courroie sans fin trapézoidale ou trapézoidale à nervures et système de transmission

(30) Priorität: 03.12.1990 DE 4038465
(43) Veröffentlichungstag der Anmeldung: 10.06.1992
(73) Patentinhaber: Continental Aktiengesellschaft, 30165 Hannover (DE)
(72) Erfinder: Moses, Reinhold, W-3456 Eimen 1 (DE)

(56) Entgegenhaltungen:
- EP-A- 0 281 432
- EP-A- 0 285 072
- EP-A- 0 339 249
- US-A- 2 679 088
- US-A- 2 792 319
- US-A- 2 955 345
- US-A- 3 108 484
- US-A- 3 900 680
- US-A- 4 790 802
- PATENT ABSTRACTS OF JAPAN, Band 14, Nr. 135 (M-949). 14. März 1990;& JP-A-2 003 724
- Chemische Technologie, Band 6, Carl Hanser Verlag, 4. Auflage,1982 S.729

## Beschreibung

Die Erfindung betrifft einen endlosen elastischen Keilriemen oder Keilrippenriemen zur Übertragung von Umfangskräften, mit einem in elastomerem Werkstoff eingebetteten Zugstrang, der aus in Längsrichtung verlaufenden synthetischen Verstärkungsfäden besteht.

Keilriementriebe dienen der reibschlüssigen Bewegungs- und Leistungsübertragung. Sie ermöglichen auf einfache Weise bestimmte Übersetzungsverhältnisse bei entsprechender Wahl des Durchmesserunterschiedes von angetriebener und antreibender Keilriemenscheibe. Die endlosen Keilriemen weisen als Zugstrang eingebettete Verstärkungsfäden, den sogenannten Seilcord, auf, die in Längsrichtung in der neutralen Faser des Keilriemens angeordnet sind. Die üblichen Standard-Keilriemen haben eine gleichmäßige, aber sehr geringe Dehnung und müssen durch eine geeignete Vorrichtung wie Achsabstand-Verstellung oder Spannrollen nachzuspannen sein, um die richtige Riemenspannung einzustellen. Dadurch kann die während des Betriebes auftretende geringe Riemendehnung ausgeglichen werden.

Für besondere Einsatzbedingungen wurden sogenannte elastische Keilriemen zur Leistungsübertragung entwickelt. Diese Keilriemen sind einerseits dehnbar genug, um sie ohne Änderung des Abstandes der Riemenscheiben auf diesen anbringen zu können und andererseits elastisch genug, um nach der Anbringung die für eine gute Leistungsübertragung erforderliche Betriebsspannung aus sich heraus zu gewährleisten.

Aus der US-PS 3 108 484 ist ein elastischer Antriebsriemen ohne Gewebeeinlage bekannt, der bis über 28% seiner Länge gedehnt werden kann. Dieser Antriebsriemen aus homogenem Gummimaterial kann nur für Antriebe mit sehr kleinen Leistungen eingesetzt werden.

Um auch größere Umfangskräfte bzw. Anlaufmomente übertragen zu können, wäre es wünschenswert, einen elastischen endlosen Keilriemen mit einer verstärkenden Zugstranglage zu versehen. Dazu wird in dem Fachbuch Keilriemen, Herausgeber: Arntz-Optibelt-Gruppe Höxter, Verlag Ernst Heyer, Essen, Seite 78, als geeigneter Werkstoff für den Cordfaden Polyamid 66 vorgeschlagen. Polyamid 66 eignet sich für diese besondere Einsatzbedingung wegen seines flachen Dehnungsmoduls im unteren Lastbereich und wegen seiner hohen Elastizität.

Aus der EP 0 281 432 A wird ein endloser, elastischer Riemen zur Leistungsübertragung vorgeschlagen, der eine Längsarmierung aus Fäden aufweist. Dieser Riemen soll einen genügend niedrigen Gesamtdehnungsmodul aufweisen, der die für die Montage auf den feststehenden Riemenscheiben benötigte Dehnung ermöglicht. Nach der Anbringung soll der Riemen eine ausreichende Betriebsspannung beibehalten, um die Kraftübertragung zu gewährleisten.

Aus der EP-A-0 285 072 ist ein elastischer Keilrippenriemen bekannt, dessen verstärkender Zugstrang eine Reißdehnung von mindestens 18% aufweist. Die Fäden eines jeden Zugstranges sind nicht vorgestreckt und mit mindestens 300 Umdrehungen pro Meter Faden miteinander verzwirnt.

Der Erfindung liegt die Aufgabe zugrunde, einen endlosen elastischen Keilriemen oder Keilrippenriemen der eingangs beschriebenen Art zu schaffen, der eine ausreichende Dehnung aufweist, um für die Montage auseinandergezogen zu werden, und der nach dem Montieren eine ausreichende Mindestspannung aufbringt, die eine optimale Leistungsübertragung gewährleistet.

Die Aufgabe wird erfindungsgemäß durch die im Kennzeichen des Anspruchs 1 aufgeführten Merkmale gelöst.

Die aus Polyamid 66 bestehenden Verstärkungsfäden nutzen dessen spezifisches Dehnungsniveau, seine große Elastizität, seine hohe Reiß- und Scheuerfestigkeit sowie die hervorragenden dynamischen Eigenschaften. Durch den Verstrekkungsprozeß werden diese charakteristischen Eigenschaften hergestellt. In dem Verstreckungsprozeß wird der jeweilige Polyamidfaden um etwa das Vierfache seiner Ausgangslänge gereckt.

Der ausgewählte Bereich der Fadenumdrehungen beim Verzwirnen begrenzt die Dehnung und erhöht die Elastizität. Die Verwendung von Chloroprenkautschuk erhöht die Elastizität von der Werkstoffseite und verbessert die Standfestigkeit, da die Abriebfestigkeit und Alterungsbeständigkeit günstig beeinflußt werden. Die auf die Verstärkungsfäden wirkende niedrige Vorspannung bei dem Einbetten dieser Fäden verhindert ein Herabsetzen der Dehnfähigkeit, sichert aber durch die aufgebrachte Gegenkraft ein lagegenaues Aufbringen der Verstärkungsfäden. Mit dem angegebenen Bereich des Dehnungsmoduls wird ein funktionsfähiger endloser, elastischer Keilriemen geschaffen, der leicht gedehnt werden kann und dennoch eine ausreichende Mindestspannung nach der Montage aufbringt.

Vorteilhafte Ausgestaltungen der Erfindung werden in den Unteransprüchen 2 bis 6 beschrieben.

Durch die Erfindung wird ein betriebssicherer elastischer Keilriemen oder Keilrippenriemen geschaffen, der eine gute Kraftübertragung gewährleistet und sich für die automatische Montage eignet. Das Entfallen einer Achsabstandverstellvorrichtung oder einer Spannvorrichtung verringert den Platzbedarf des Keilriementriebes. Der erfindungsgemäß aufgebaute elastische Keilriemen weist eine hohe Standzeit auf.

Anhand der Zeichnung wird nachstehend ein Ausführungsbeispiel der Erfindung näher erläutert. Es zeigt
- Fig. 1: einen Keilrippenriemen im Querschnitt,
- Fig. 2: eine einstufige Verzwirnung des den Zugstrang aufbauenden Seilcordes,
- Fig. 3: ein Kraft-Dehnungsschaubild für den Bereich des elastischen Keilrippenriemens im Vergleich zu den dehnungsarmen Standardriemen.

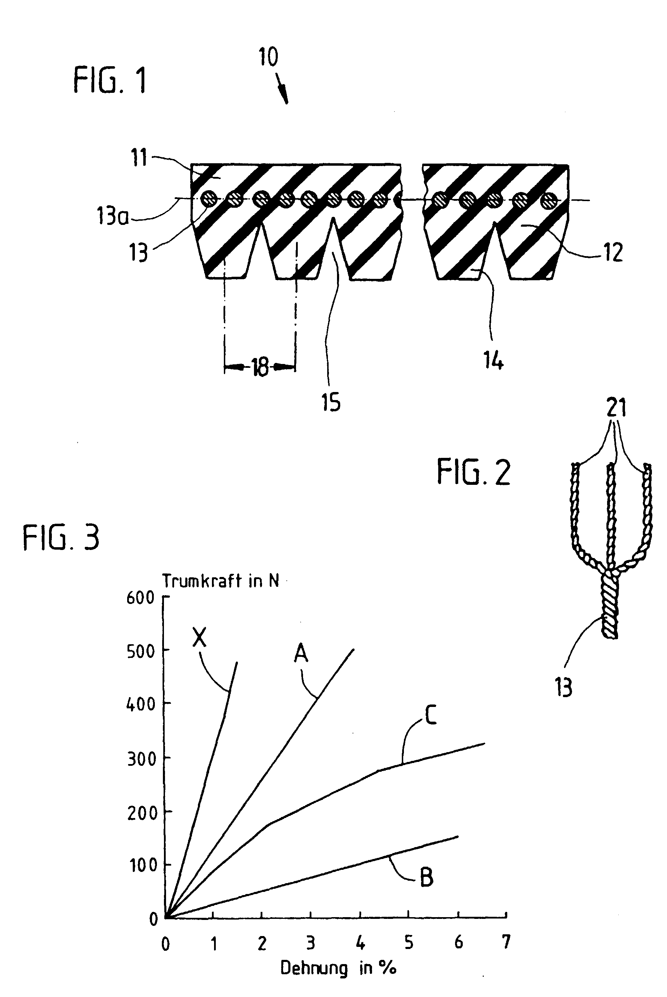

In Fig. 1 wird ein elastischer, endloser Keilrippenriemen 10 im Querschnitt gezeigt. Dieser Keilrippenriemen 10 findet in einem Keilriementrieb Verwendung, zu dem noch mindestens zwei mit entsprechenden Umfangsrillen versehene, hier nicht gezeigte Keilriemenscheiben gehören. Der Keilrippenriemen 10 weist einen Keilriemenrücken 11 und einen Rippenteil 12 auf, die beide aus Chloroprenkautschuk aufgebaut sind. Zwischen dem Keilriemenrücken 11 und dem Rippenteil 12 ist ein Zugstrang 13 im Bereich der neutralen Faser 13a angeordnet.

Der Rippenteil 12 besteht aus mehreren zueinander parallelen, in der Längsrichtung des Keilrippenriemens 10 verlaufenden Profilrippen 14, die zwischen sich Profilrillen 15 bilden. Der Abstand zwischen den Mitten zweier benachbarter Profilrippen 14 wird als Rippenteilung 18 bezeichnet.

Bei dem gezeigten Ausführungsbeispiel sind die Profilrippen 14 mit trapezförmigem, die Profilrillen 15 mit V-förmigem Querschnitt ausgebildet.

Der Zugstrang 13 besteht aus einem wendelförmig aufgespulten Seilcord aus drei miteinander einstufig verzwirnten Polyamidgarnen 21 (Fig. 2). Jedes Polyamidgarn 21 ist in sich bereits verdreht und wurde bei der Herstellung um das Vierfache seiner Ausgangslänge gereckt.

Die Polyamidgarne 21 haben eine Reißdehnung von 25%. Nach dem Verzwirnen erhält man dehnfähigen Seilcord 13 mit einer Reißdehnung von 20%.

Der Seilcord 13 wird mit einer Gegenkraft von 5 N unter einer Steigung von 110 Windungen auf einer Breite von 100 mm auf den Kautschukrohling aufgebracht. Nach dem Auflegen der abdeckenden Kautschukplatte und dem verformenden Ausvulkanisieren erhält man einen elastischen Keilrippenriemen mit einer hohen Dehnfähigkeit.

In der Fig. 3 ist ein Kraft-Dehnungsdiagramm dargestellt, in dem die Kraft-Dehnungskurve eines Standardriemens (Kurve X) zum Vergleich mit dem Kraft-Dehnungsbereich von erfindungsgemäßen elastischen Riemen dargestellt ist. Als einheitliche Bezugslänge wurde die Fertigungslänge der Riemen von 1270 mm bei einer Riemenbreite von 10 mm gewählt.

Die Kurven A und B verlaufen flacher und begrenzen den Bereich der erfindungsgemäßen elastischen Riemen. Die Kurve A zeigt eine Dehnungscharakteristik von 150 N für 1% Dehnung, während die Kurve B 25 N für 1% Dehnung betrifft. Die in diesem Bereich verlaufende Kraft-Dehnungskurve C stellt die Dehnfähigkeit des im Ausführungsbeispiel beschriebenen elastischen Keilrippenriemens dar.

## Patentansprüche

1. Endloser elastischer Keilriemen oder Keilrippenriemen zur Übertragung von Umfangskräften zur Montage auf Riemenscheiben ohne Änderung des Riemenscheibenabstandes und zur Gewährleistung einer für eine Kräfteübertragung ausreichenden Betriebsspannung nach der Montage, mit einem in elastomerem Werkstoff eingebetteten Zugstrang, der aus in Längsrichtung verlaufendem synthetischen Seilcord besteht, gekennzeichnet durch folgende Merkmale:
- jeder Seilcord besteht aus mehreren hochelastischen, verstreckten Polyamidgarnen (21),
- die Polyamidgarne (21) sind mit höchstens 298 Umdrehungen pro laufenden Fadenmeter verzwirnt,
- der elastomere Werkstoff besteht aus einer Chloroprenkautschukmischung (CR),
- der Seilcord (13) ist unter einer geringen Vorspannung von 5 *N bis* 8 N im Riemenkörper eingebettet,
- die Dehnungscharakteristik des Keilriemens oder Keilrippenriemens (10) liegt bei einer Riemenbreite von 1 cm zwischen 25 N und 150 N pro 1% Dehnung.

2. Elastischer Keilriemen oder Keilrippenriemen nach Anspruch 1, dadurch gekennzeichnet, daß je drei Polyamidgarne (21) einstufig zu einem Seilcord (13) zusammengezwirnt sind.

3. Elastischer Keilriemen oder Keilrippenriemen nach Anspruch 1, dadurch gekennzeichnet, daß sechs Polyamidgarne zweistufig zu einem Seilcord zusammengezwirnt sind.

4. Elastischer Keilriemen oder Keilrippenriemen nach Anspruch 1, dadurch gekennzeichnet, daß der elastomere Werkstoff zwei unterschiedliche Chloroprenkautschukmischungen aufweist, wobei im Querschnitt des Riemenkörpers gesehen die obere Rückenschicht verschleißfest und quersteif ist, während die untere Schicht zum Zugstrang (13) hin haftfähig ist und im übrigen verschleißarm ausgebildet ist.

5. Elastischer Keilriemen oder Keilrippenriemen nach Anspruch 1, dadurch gekennzeichnet, daß der elastomere Werkstoff drei unterschiedliche Chloroprenkautschukmischungen aufweist, wobei im Querschnitt des Riemenkörpers gesehen die obere Rückenschicht verschleißfest und quersteif ist, die mittlere Einbettungsschicht für den Zugstrang (13) haftfähig ist und die untere Laufschicht verschleißarm ausgebildet ist.

6. Elastischer Keilriemen oder Keilrippenriemen nach einem der Ansprüche 1 bis 4, dadurch gekennzeichnet, daß seine entspannte Länge 1 bis 10% geringer ist als die nominale Betriebslänge nach der Montage.

## Claims

1. Endless, resilient V-belt or ribbed V-belt for the transmission of circumferential forces for assembly on belt pulleys without changing the spacing between belt pulleys and for ensuring an operational tension, sufficient for a transmission of forces, after the assembly, having a tensile strand, which is embedded in elastomeric material and formed from synthetic cable cord extending in the longitudinal direction,
characterised by the following features:
- each cable cord is formed from a plurality of highly resilient, stretched polyamide yarns (21),
- the polyamide yarns (21) are twisted with a maximum of 298 turns per filament metre,
- the elastomeric material comprises a chloroprene rubber mixture (CR),
- the cable cord (13) is embedded in the belt body with a low initial tension of 5 N to 8 N,
- the expansion characteristic of the V-belt or ribbed V-belt (10) is between 25 N and 150 N per 1% expansion with a belt width of 1 cm.

2. Resilient V-belt or ribbed V-belt according to claim 1, characterised in that three polyamide yarns (21) at a time are twisted together in one stage to form a cable cord (13).

3. Resilient V-belt or ribbed V-belt according to claim 1, characterised in that six polyamide yarns are twisted together in two stages to form a cable cord.

4. Resilient V-belt or ribbed V-belt according to claim 1, characterised in that the elastomeric material has two different chloroprene rubber mixtures, the upper rear layer being wear-resistant and transverse resistant, when viewed with respect to the cross-section of the belt body, while the lower layer is adhesive towards the tensile strand (13) and also has a low-wear configuration.

5. Resilient V-belt or ribbed V-belt according to claim 1, characterised in that the elastomeric material has three different chloroprene rubber mixtures, the upper rear layer being wear-resistant and transverse resistant, when viewed with respect to the cross-section of the belt body, the central embedded layer for the tensile strand (13) being adhesive, and the lower contact layer having a low-wear configuration.

6. Resilient V-belt or ribbed V-belt according to one of claims 1 to 4, characterised in that its non-tensioned length is 1 to 10 % less than the nominal operational length after assembly.

## Revendications

1. Courroie trapézoïdale ou courroie trapézoïdale à nervures, élastique, sans fin, pour la transmission de forces périphériques, apte à être montée sur une poulie sans modification de la position de la poulie et apte à garantir une tension de fonctionnement suffisante pour la transmission de force après le montage, comportant une corde de traction, noyée dans un matériau élastomère, qui est constituée d'une corde synthétique s'étendant dans la directon longitudinale, caractérisée par les caractéristiques suivantes :
- chaque corde est constituée de plusieurs fils polyamide (21) étirés, très élastiques,
- les fils polyamide (21) sont tordus avec au maximum 298 tours par mètre linéaire de fil,
- le matériau élastomère est un mélange de caoutchouc de chloroprène (CR),
- la corde (13) est noyée sous une faible précontrainte de 5 N à 8 N dans le corps de la courroie,
- la caractéristique d'allongement de la courroie trapézoïdale ou de la courroie trapézoïdale à nervures (10) est comprise entre 25 N et 150 N pour 1 % d'allongement, pour une largeur de courroie de 1 cm.

2. Courroie trapézoïdale ou courroie trapézoïdale à nervures, élastique selon la revendication 1, caractérisée en ce que trois fils polyamide (21) sont tordus ensemble en un retors pour former une corde (13).

3. Courroie trapézoïdale ou courroie trapézoïdale à nervures, élastique selon la revendication 1, caractérisée en ce que six fils polyamide sont tordus ensemble en deux retors pour former une corde.

4. Courroie trapézoïdale ou courroie trapézoïdale à nervures, élastique selon la revendication 1, caractérisée en ce que le matériau élastomère comprend deux mélanges caoutchouc de chloroprène différents, la couche arrière supérieure, vue dans la section transversale du corps de la courroie, étant résistante à l'usure et rigide transversalement, tandis que la couche inférieure est adhérente vers la corde de traction (13) et par ailleurs peu sujette à usure.

5. Courroie trapézoïdale ou courroie trapézoïdale à nervures, élastique selon la revendication 1, caractérisée en ce que le matériau élastomère comprend trois mélanges de caoutchouc de chloroprène différents, la couche arrière supérieure, vue dans la section transversale du corps de la courroie, étant résistante à l'usure et rigide transversalement, la couche d'enrobage centrale pour la corde de traction (13) est adhérente et la couche de roulement inférieure est peu sujette à usure.

6. Courroie trapézoïdale ou courroie trapézoïdale à nervures, élastique selon l'une des revendications 1 à 4, caractérisée en ce que sa longueur détendue est de 1 à 10 % inférieure à la longueur de service nominale après montage.
